(19) Europäisches Patentamt
European Patent Office
Office européen des brevets

(11) **EP 2 439 978 A1**

(12) **EUROPEAN PATENT APPLICATION**
published in accordance with Art. 153(4) EPC

(43) Date of publication:
**11.04.2012 Bulletin 2012/15**

(51) Int Cl.:
***H04W 28/00*** *(2009.01)*

(21) Application number: **09845387.1**

(86) International application number:
**PCT/CN2009/072051**

(22) Date of filing: **31.05.2009**

(87) International publication number:
**WO 2010/139106 (09.12.2010 Gazette 2010/49)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(71) Applicant: **Huawei Technologies Co., Ltd.
Shenzhen, Guangdong 518129 (CN)**

(72) Inventor: **ZHOU, Mingyu
Guangdong 518129 (CN)**

(74) Representative: **Pfenning, Meinig & Partner GbR
Patent- und Rechtsanwälte
Theresienhöhe 13
80339 München (DE)**

(54) **METHOD AND APPARATUS FOR SIGNAL TRANSMISSION AND RECEPTION**

(57) A method for transmitting a signal and a method for receiving the signal is provided. The method for transmitting the signal includes: determining a precoding vector group, where the precoding vector group includes N precoding vectors, and N is an integer greater than 1; and using each precoding vector in the precoding vector group to transmit the signal. The method for receiving the signal includes: receiving the signal that is transmitted by a User Equipment (UE) by using each precoding vector in a precoding vector group, where the precoding vector group includes N precoding vectors, and N is an integer greater than 1; and analyzing the received the signal to obtain parameters required for scheduling. In addition, a UE and a network device are provided. With the above technical solutions, a network may receive the signal transmitted by the UE to obtain parameters required for scheduling.

Start

101

Determine a precoding vector group

102

Use each precoding vector to transmit signals

End

FIG. 1

EP 2 439 978 A1

**Description**

**FIELD OF THE INVENTION**

The present invention relates to the field of communications technologies, and in particular, to a technology for transmitting and receiving a signal.

**BACKGROUND OF THE INVENTION**

When a network schedules resources for a User Equipment (User Equipment, UE), the network needs to acquire the channel state of an uplink channel. Therefore, a Sounding Reference Signal (Sounding Reference Signal, SRS) is introduced in the communication system. The network may acquire the uplink channel state according to the SRS transmitted by the UE so as to schedule resources.

In the current communication system, the UE uses a single antenna to transmit a uplink control signals and/or uplink data signals. Therefore, the uplink SRS can be transmitted only through a single antenna. However, usually the network needs to acquire the channel states corresponding to each antenna of the UE. Therefore, to enable the network to acquire the channel states corresponding to all antennas of the UE without increasing the complexity of processing of the UE, the UE may transmit uplink SRSs on each antenna alternately at different time, that is, transmit SRSs on different antennas in a time division multiplexing mode. Thereby, in the case that uplink signals can be transmitted only through a single antenna, the network is enabled to acquire the channel states corresponding to all antennas of the UE.

To improve the uplink transmission capability, a multi-antenna technology is introduced in the communication system. Therefore, the UE may transmit uplink control signals or data signals through multiple antennas simultaneously. However, there is no solution to transmitting SRSs through multiple antennas. If each antenna transmits the same SRS, the SRS received by the network is a sum of the SRS after channel fading transmitted from each antenna. The network can only obtain the sum of channel states by analyzing the received SRS, but cannot acquire the channel state corresponding to each antenna.

**SUMMARY OF THE INVENTION**

Embodiments of the present invention provide a method for transmitting signal so that a network may acquire the channel state corresponding to each antenna in multiple antennas of a UE according to the received signal.

Embodiments of the present invention also provide a UE and a Base Station for transmitting signals.

An embodiment of the present invention provides a method for transmitting signals, where the method includes:

determining a precoding vector group, where the precoding vector group includes N precoding vectors, and N is an integer greater than 1; and
using each precoding vector in the precoding vector group to transmit signals.

An embodiment of the present invention provides a method for receiving the signal, where the method includes:

receiving the signal that are transmitted by a UE by using each precoding vector in a precoding vector group, where the precoding vector group includes N precoding vectors, and N is an integer greater than 1; and
analyzing the received signals to obtain parameters required for scheduling.

An embodiment of the present invention provides a UE, where the UE includes:

a determining module, configured to determine a precoding vector group, where the precoding vector group includes N precoding vectors, and N is an integer greater than 1; and
a transmitting module, configured to transmit signals by using each precoding vector in the precoding vector group determined by the determining module.

An embodiment of the present invention provides a network device, where the network device includes:

a receiving module, configured to receive signals that are transmitted by a UE by using each precoding vector in a precoding vector group, where the precoding vector group includes N precoding vectors, and N is an integer greater than 1; and
an analyzing module, configured to analyze the signals received by the receiving module to obtain parameters required for scheduling.

As seen from the above technical solutions, in the embodiments of the present invention, the signals transmitted by multiple antennas of the UE are precoded, and the precoding vectors used by the signals transmitted by each antenna belong to the same precoding vector group. Because the signals transmitted in different time segments are precoded through different precoding vectors in the precoding vector group, the network may acquire the channel state corresponding to each antenna in the multiple antennas according to the received signals.

**BRIEF DESCRIPTION OF THE DRAWINGS**

FIG. 1 is a schematic flowchart of a method for transmitting signals according to an embodiment of the present invention;
FIG. 2 is a schematic flowchart of a method for receiving the signal according to an embodiment of the present invention;
FIG. 3 is a schematic flowchart of a method for transmitting the signal according to an embodiment of the present invention;
FIG. 4 is a schematic flowchart of a method for receiving the signal according to an embodiment of the present invention;
FIG. 5 is a schematic structure diagram of a UE according to an embodiment of the present invention; and
FIG. 6 is a schematic structure diagram of a network device according to an embodiment of the present invention.

**DETAILED DESCRIPTION OF THE EMBODIMENTS**

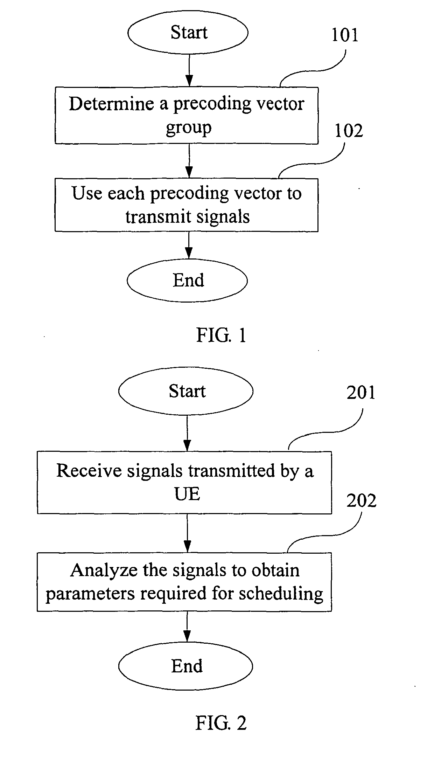

The following embodiments of the present invention may be applied to various communication systems using the multi-antenna technology.
The following describes an embodiment of the present invention in detail with reference to FIG. 1. This embodiment provides a method for transmitting a signal, where the method includes the following steps.
Step 101: Determine a precoding vector group, where the precoding vector group includes N precoding vectors, and N is an integer greater than 1.
Step 102: Use each precoding vector in the precoding vector group to transmit a signal.
In this embodiment, a precoding vector group is determined for use, and then each precoding vector in the precoding vector group is used to transmit the signal. Therefore, the network may receive the corresponding signal, and obtain by analysis parameters required for scheduling, for example, the quality of the channel corresponding to each antenna. Further, the network may perform scheduling according to the obtained parameters.
Further, this embodiment may be specifically applied to the scenario of transmitting a reference signal, that is, step 102 is specifically as follows: according to a set rule, using each precoding vector in the precoding vector group to transmit the reference signal. In this embodiment and the following embodiments, the transmitting the reference signal is taken as an example for further description, but the embodiments are not limited thereto, and may also be applied to the scenarios of transmitting other signals. Further, this embodiment and the following embodiments may be applied to the scenario of transmitting SRSs.
Further, in this embodiment, the using each precoding vector in the precoding vector group to transmit the signal may be as follows: according to the set rule, using each precoding vector in the precoding vector group to the transmit signal. The set rule may be preset in the UE, or may be notified by the network through signaling, or may be obeyed on by both the UE and the network. The signaling notifying the set rule may be, for example, downlink control signaling, high-layer signaling, or other signaling, and is not further described hereinafter. In this embodiment and the following embodiments, when the notifying through the signaling from the network is involved, the notification may be carried through uplink scheduling signaling, downlink control signaling, high-layer signaling, or other signaling, and may be carried through existing signaling or through new signaling, which is not further described hereinafter.
In this embodiment, the set rule may be as follows: in the first time segment of transmitting the reference signal, using the precoding vector with the minimum or maximum serial number in the determined precoding vector group to the transmit signal, and in the second time segment and later time segments, using other precoding vectors in the precoding vector group alternately. The alternate using method is not limited. The same precoding vector may be used in multiple consecutive time segments, or different precoding vectors may be used in the adjacent time segments, so long as all the vectors in the precoding vector group are used, which is not further described hereinafter. For example, if the determined precoding vector group is the first group, and the first group includes precoding vectors with serial numbers 1 and 2, the precoding vector with the serial number 1 is used in the first time segment and may still be used in the second time segment, and the precoding vector with the serial number 2 is used in the third time segment. Therefore, it is ensured that all the precoding vectors in the first group are used. Certainly, the precoding vector with the serial number 2 may be used in the second time segment, or the precoding vector with the serial number 2 may be used in a later time segment. When the precoding vector in the precoding vector group is more than 1, analogy may be made with reference to the above example.

In this embodiment, the set rule may be as follows: in the first time segment of transmitting the reference signal, using a precoding vector the same as that in current or last uplink transmission in the determined precoding vector group to the transmit signal, and in the second time segment and later time segments, using other precoding vectors in the precoding vector group alternately. The uplink transmission refers to transmission from the UE to the network that is implemented in various modes and carries diversified contents. This embodiment and the following embodiments assume that the uplink transmission is transmission of a Physical Uplink Share Channel (Physical Uplink Share Channel, PUSCH), but the embodiments are not limited to the PUSCH transmission, which is not further described hereinafter. Because the PUSCH transmission may also use precoding, all the precoding vectors that are available in the PUSCH transmission may be, for example, used as all the precoding vectors that are available by the reference signal. Therefore, the setting may be: in the first time segment of transmitting the reference signal, using a precoding vector the same as that in the PUSCH transmission in the first time segment. Because the UE does not have PUSCH transmission in every time segment, the setting may be: in the first time segment of transmitting the reference signal, using the precoding vector used in the last PUSCH transmission. The above setting rule may also be described as: binding the precoding vector used by the reference signal in the first time segment with the precoding vector used in the current PUSCH transmission, or with the precoding vector used in the last PUSCH transmission.

Further, because the precoding vector used by the reference signal in the first time segment is bound with the precoding vector used in the current or last PUSCH transmission, the change of the precoding vector used by the reference signal may be triggered through the indication of the precoding vector in the uplink scheduling signaling sent by the network to the UE. For example, the uplink scheduling signaling sent by the network to the UE instructs the UE to use a precoding vector different from that used in the current PUSCH transmission, and in this case, the precoding vector used for transmitting the reference signal may be changed to the precoding vector indicated by the uplink scheduling signaling according to the uplink scheduling signaling. Likewise, in this embodiment and the following embodiments, various solutions for binding with the current or last PUSCH transmission may trigger change of the precoding vector, or the precoding vector group, or the set of precoding vector groups used by the reference signal through the uplink scheduling signaling, which is not further described hereinafter.

In this embodiment and the following embodiments, the time segment is exemplified by a Transmission Time Interval (Transmission Time Interval, TTI), but not limited to the TTI, and may be other time units, for example, a subframe, which is not further described hereinafter.

In this embodiment, the set rule may be as follows: in every N TTIs, using different precoding vectors in the determined precoding vector group to transmit signals in different TTIs according to the use order. It can be seen from the description of the above two set rules, if every one of N precoding vectors in the precoding vector group is just used once from the first TTI to the $N^{th}$ TTI, the network may acquire the channel states corresponding to all antennas or antenna ports in the shortest time. In this embodiment, the use order is not limited, and the following five use orders and their combinations are given as examples.

The first use order: use the precoding vectors according to an ascending order of the serial numbers thereof, and use the precoding vector with the minimum serial number in an adjacent time segment after the precoding vector with the maximum serial number is used. For example, if the determined precoding vector group includes precoding vectors with serial numbers 1, 2, and 3, the precoding vectors are used in the following order: first the precoding vector with the serial number 1, then the precoding vector with the serial number 2, and finally the precoding vector with the serial number 3. After the precoding vector with the serial number 3 is used, the precoding vector with the serial number 1 is used again. In the first use order, which precoding vector is used by the first TTI in every N TTIs is not limited, so long as the precoding vectors are used according to the ascending order of the serial numbers thereof in every N TTIs and the precoding vector with the minimum serial number is used after the precoding vector with the maximum serial number.

The second use order: use the precoding vectors according to a descending order of the serial numbers thereof, and use the precoding vector with the maximum serial number in an adjacent time segment after the precoding vector with the minimum serial number is used. For example, if the determined precoding vector group includes precoding vectors with serial numbers 1, 2, and 3, the precoding vectors are used in the following order: first the precoding vector with the serial number 3, then the precoding vector with the serial number 2, and finally the precoding vector with the serial number 1. After the precoding vector with the serial number 1 is used, the precoding vector with the serial number 3 is used again. In the second use order, which precoding vector is used by the first TTI in every N TTIs is not limited, so long as the precoding vectors are used according to the descending order of the serial numbers thereof in every N TTIs and the precoding vector with the maximum serial number is used after the precoding vector with the minimum serial number.

The third use order: use the precoding vector with the minimum or maximum serial number in the first TTI, and do not limit the use order in the subsequent TTIs, so long as every one of N precoding vectors in the precoding vector group is used once in every N TTIs. For example, use the precoding vector with the minimum or maximum serial number in the first TTI, and use the precoding vectors in a random order in the subsequent TTIs.

The fourth use order: use the precoding vector the same as that in the current time segment or last PUSCH transmission in the first TTI, and do not limit the use order in the subsequent TTIs, so long as every one of N precoding vectors in the precoding vector group is used once in every N TTIs.

The fifth use order: use the precoding vectors according to a random order, so long as every one of N precoding vectors in the precoding vector group is used once in every N TTIs. Further, the random order may be bound with a UE ID or cell ID, that is, different cell IDs correspond to different random orders, or different UE IDs correspond to different random orders, where the different random orders may be different random sequences or different producing factors.

In this embodiment, any combination of the above five use orders may be practicable, for example, the combination of the first use order and the fourth use order, that is, the precoding vector the same as that in the current time segment or last PUSCH transmission is used in the first TTI, and the precoding vectors according to the ascending order of the serial numbers thereof are used in the subsequent TTIs. For example, the precoding vector group includes precoding vectors with serial numbers 1, 3, and 4, and the serial number of the precoding vector used in the last PUSCH transmission is 3; in this case, the precoding vector with the serial number 3 is used in the first TTI, the precoding vector with the serial number 4 is used in the second TTI, the precoding vector with the serial number 1 is used in the third TTI, and the precoding vector with the serial number 3 is used in the fourth TTI, and the rest can be deduced in the same way.

In this embodiment, the use order is not limited to the above five use orders and the combinations thereof, and may also be other use orders, for example, the precoding vectors are used according to an order constituting a specific sequence.

Further, in this embodiment, only one use order or a set rule may be used fixedly, or the network may send signaling to instruct the UE to use different use orders or different set rules. For example, the set rule used by the UE currently is as follows: in every N TTIs, using different precoding vectors in the determined precoding vector group to transmit the signal in different TTIs according to the use order, where the ascending order is used. The network may send signaling to instruct the UE to use the precoding vector with the maximum serial number used in the first TTI to transmit the signal in the next TTI, and other TTIs are not limited by the set rule; or the network may send signaling to instruct the UE to use precoding vectors according to the descending order in the fourth TTI after the current TTI. The signaling indication may be an existing signaling indication of the network, or may be a new signaling indication, and the indication may be contents of the indication directly carried in the signaling, or may be triggered by the uplink scheduling signaling or control signaling, which is not further described hereinafter.

Further, the method for determining the precoding vector group in this embodiment may be as follows. The UE determines the precoding vector group according to the signaling indication of the network or according to the condition of the UE itself. This embodiment does not limit the determining mode, and is only described by taking the following determining method as an example, but is not limited to the following determining method.

In this embodiment, the determining method may be, for example, using any precoding vector group selected from multiple precoding vector groups, that is, the network may notify the UE to select any precoding vector group, or the UE decides to select any precoding vector group.

In this embodiment, the determining method may be, for example, using a precoding vector group that is preset or indicated by signaling of the network, that is, using a precoding vector group preset in the UE, or sending, by the network, signaling to instruct the UE to use a precoding vector group. Further, the using the precoding vector group that is preset or indicated by the signaling of the network may be that the UE uses only the precoding vector group fixedly, or the UE starts to use the precoding vector group and changes the precoding vector group periodically. For example, if the preset precoding vector group is the second group, the UE may always use the second group, or may take the second group as the precoding vector group that the UE starts to use, and afterward, change the used precoding vector group once in every 100 TTIs. This embodiment does not limit the change rule, for example, the precoding vector groups may be changed according to an ascending order or a descending order of group numbers thereof, and the precoding vector groups used before or after the change may be different or the same. It should be noted that the network sends signaling to instruct the UE once or multiple times to use a precoding vector group, and that the precoding vector group indicated every time may be the same or different.

In this embodiment, the determining method may be, for example, using the precoding vector group where the precoding vector used in the current TTI or last PUSCH transmission is included, that is, binding with the PUSCH in the current time segment or last PUSCH transmission. For example, if the serial number of the precoding vector used in the last PUSCH transmission is 1 and belongs to the first precoding vector group, the precoding vector group used for transmitting the reference signal is also the first group.

In this embodiment, the determining method may be, for example, using a precoding vector group in a set of precoding vector groups where the precoding vector used in the current TTI or last PUSCH transmission is included, that is, binding with the current TTI or last PUSCH transmission. The precoding vector group is a precoding vector group fixed in the set of precoding vector groups, or the precoding vector group is any precoding vector group selected from the set of precoding vector groups. In this embodiment, one or several precoding vector groups may constitute a set of precoding vector groups. For example, the precoding vector groups with rank 1 constitute a set of precoding vector groups, and the precoding vector groups with rank 2 constitute a set of precoding vector groups.

The determining method in this embodiment may be any combination of the above determining methods. The combined determining method may be, for example, using a precoding vector group in a set of precoding vector groups where the precoding vector used in the current TTI or last PUSCH transmission is included, and selecting the precoding vector group with the minimum serial number in the set of precoding vector groups.

Further, in this embodiment, the above determining method may be fixed, that is, a fixed determining method is used and not changed when the reference signal is transmitted; and the above determining method may also be changed, for example, the network instructs the UE through signaling to change the determining method, that is, to switch between different determining methods.

In this embodiment, the UE or network may also make different selections from the above determining methods according to different conditions. For example, after the UE accesses the current cell, if the UE does not use the precoding mode to perform PUSCH transmission, preferably, the UE does not use the determining method of binding with the current PUSCH transmission, but may use the determining method of binding with the precoding vector used in the last PUSCH transmission, or may use the determining method with the fixed precoding vector group, or may use the determining method by notifying through signaling from the network. For example, after the UE accesses the current cell, if the network configures the UE to use the precoding mode to perform PUSCH transmission, the UE may use the method of binding with the precoding vector used in the current PUSCH transmission, or may use the method of binding with the precoding vector used in the last PUSCH, or may use the determining method with the fixed precoding vector group, or may use the determining method by notifying through signaling from the network. For example, when the precoding mode is not used for transmission in the current PUSCH transmission and/or last PUSCH transmission of the UE, preferably, the determining method of binding with the precoding vector used in the current or last PUSCH transmission is not used, but the determining method with the fixed precoding vector group is used, or the determining method through the signaling indication of the network is used. If the UE itself determines the precoding vector group, the UE may, for example, use different precoding vector groups according to the above conditions; while if the UE determines the precoding vector group according to the indication of the network, the network may use different precoding vector groups according to the above conditions.

Further, in this embodiment, the UE may group, according to the signaling indication of the network, the precoding vectors that are available, or the UE itself may group the precoding vectors that are available. The following grouping methods are used only for description, and the present invention is not limited to the following grouping methods. For example, the precoding vectors that are mutually orthogonal may be sorted into a group; and the precoding vectors that are conjugate orthogonal may be sorted into a group. In addition, for example, multiple precoding vectors may constitute a matrix; and if the norm in row and/or column of an inverse matrix of the matrix is the minimum, these precoding vectors are sorted into a group. Further, during grouping, the number of the precoding vectors included in each group may be equal to the number of antennas or antenna ports used for PUSCH transmission, that is, M precoding vectors are sorted into a group, where M is the number of antennas or antenna ports used for uplink transmission, which is not further described hereinafter. In this embodiment, the grouping step may be executed at any time. For example, the grouping step is executed once at the beginning, and is not executed afterward or is executed again to change the grouping mode. For example, the grouping may be preset in the UE; in this case, the grouping step is not required before other steps are executed, but may be executed at any time afterward to change the grouping mode.

Further, in this embodiment, during the transmission of the reference signal, the reference signal may be transmitted on all the antennas or antenna ports used for PUSCH transmission, or may be transmitted on some of the antennas or antenna ports used for PUSCH transmission, so long as the number of antennas or antenna ports that transmit the reference signal simultaneously is greater than or equal to 2.

Through this embodiment, the UE may group, according to the signaling indication of the network or according to its own decision, the precoding vectors that are available, determine a precoding vector group, precode the reference signals by using the precoding vectors in the determined precoding vector group, and then transmit the reference signals that are precoded. The reference signals are precoded, which means multiplying a sequence by a precoding vector, and then transmitted through multiple antennas, that is, the reference signals transmitted by different antennas are signals that are obtained by performing different weighting on the same sequence. In addition, because each precoding vector in each group may be used in different TTIs, the network may receive reference signals that undergo different precoding, and through analysis, may obtain the channel states corresponding to multiple antennas or antenna ports of the reference signals transmitted by the UE, and therefore may allocate or schedule resources better.

Further, because the precoding vectors that are available are grouped, after a precoding vector group is determined, only the precoding vectors in the group need to be traversed. Compared with traversing all the precoding vectors that are available, the traversing may enable the network to acquire the channel states corresponding to multiple antennas or antenna ports in a shorter time, thereby decreasing the delay.

Further, when the used precoding vector or precoding vector group is bound with the current PUSCH transmission or last PUSCH transmission, it may be ensured that the interference of the reference signal on the adjacent cell is basically the same as the interference of PUSCH transmission on the adjacent cell, and the case of instable interference such as abrupt increase may not occur, that is, the above binding may bring more stable interference conditions.

Further, the network or UE may determine to use different precoding vector groups according to different conditions to better adapt to different conditions and ensure that the network may acquire the channel states corresponding to multiple antennas or antenna ports of the UE in a shorter time.

The following describes another embodiment of the present invention in detail with reference to FIG. 2. This embodiment provides a method for receiving the signal, where the method includes the following steps.

Step 201: Receive a signal that is transmitted by a UE by using each precoding vector in a precoding vector group, where the precoding vector group includes N precoding vectors, and N is an integer greater than 1.

Step 202: Analyze the received signal to obtain parameters required for scheduling.

Through this embodiment, the network may receive the precoded signals that are transmitted by the UE, and analyze the received signals to obtain the parameters required for scheduling.

In this embodiment, with reference to the embodiment shown in FIG. 1, the signals may be, for example, reference signals. The UE transmits the precoded reference signals through multiple antennas simultaneously. The network receives a combined signal formed by the precoded reference signals that are transmitted through multiple antennas simultaneously, and then analyzes the combined signal to acquire the channel states corresponding to multiple antennas or antenna ports of the UE, thus implementing more accurate scheduling.

Further, in this embodiment, the BS may, for example, group the precoding vectors that are available. The specific implementation is described in the embodiment shown in FIG. 1.

Further, in this embodiment, the BS may, for example, determine the precoding vector group used by the UE, and notify the determined precoding vector group or the determining method to the UE. The method used by the UE for determining the precoding vector group is described in the embodiment shown in FIG. 1. Accordingly, the method for notifying the determined precoding vector group or the determining method to the UE may be, for example, notifying the serial number of the determined precoding vector group to the UE through signaling implicitly or explicitly; or notifying the serial number of the determined precoding vector group and the change period to the UE through signaling implicitly or explicitly; or notifying the determining method to the UE. The notifying the determining method to the UE may be, for example, notifying the UE to select any precoding vector group, or notifying the UE to use the determining method of binding with the precoding vector used in the current or last PUSCH transmission, where the binding includes the binding with the precoding vector group or the set of precoding vector groups where the used precoding vector is included.

Further, in this embodiment, the BS may, for example, notify the UE to switch the determining method, and/or the set rule, and/or the use order by sending signaling, which is specifically described in the embodiment shown in FIG. 1.

Further, in this embodiment, the BS acquires the channel states corresponding to multiple antennas or antenna ports of the UE by analyzing the received reference signals. For example, in the first TTI, the BS may receive a combined signal formed by the precoded reference signals that are transmitted by the UE through multiple antennas or antenna ports in the first TTI; in the second TTI, the BS may receive a combined signal formed by the precoded reference signals that are transmitted by the UE through multiple antennas or antenna ports in the second TTI; and in the $N^{th}$ TTI, the BS may receive a combined signal formed by the precoded reference signals that are transmitted by the UE through multiple antennas or antenna ports in the $N^{th}$ TTI. The BS may acquire the channel state corresponding to each antenna or antenna port by calculating the N combined signals simply. In a more specific example, if the UE uses two antennas simultaneously for PUSCH transmission, the channel fading corresponding to the first antenna is H1, and the channel fading corresponding to the second antenna is H2; in addition, in the first TTI, the UE uses the vector $\frac{1}{\sqrt{2}}[1\ 1]$ to transmit reference signals, and in the second TTI, the UE uses the vector $\frac{1}{\sqrt{2}}[1\ -1]$ to transmit reference signals.

Therefore, the signals received by the BS in the first TTI are equal to the signals obtained by multiplying the reference signals by $\frac{1}{\sqrt{2}}[H1 + H2]$, and the signals received in the second TTI are equal to the signals obtained by multiplying the reference signals by $\frac{1}{\sqrt{2}}[H1 - H2]$. Therefore, H1 may be obtained by adding the signals received in the first TTI and the signals received in the second TTI and then performing a simple operation, and H2 may be obtained by subtracting the signals received in the second TTI from the signals received in the first TTI and then performing a simple operation.

Therefore, according to the H1 and H2 and other information, the BS may decide the rank, precoding vector, used resource, and adjustment of transmit power that need to be used by the UE for transmitting control signals or data signals, and perform rational scheduling.

The method for receiving the signal according to the embodiment of the present invention enables the network to receive a combined signal formed by the precoded signals that are transmitted by the UE through multiple antennas or antenna ports. Because different time segments use different precoding, the UE may perform a simple operation on the combined signal received in different time segments to acquire the channel states corresponding to multiple antennas or antenna ports of the UE, thus obtaining a better channel estimation precision or Signal-to-Interference-and-Noise Ratio (Signal-to-Interference-and-Noise Ratio, SINR) and ensuring subsequent scheduling of the network.

In addition, the network may group the precoding vectors, and may determine the precoding vector group used by the UE, and the mode and order of using the precoding vectors in the precoding vector group. Therefore, the precoding solution is more flexible, and the requirement that the network should acquire the channel states corresponding to multiple antennas or antenna ports of the UE in the shortest possible time may be met.

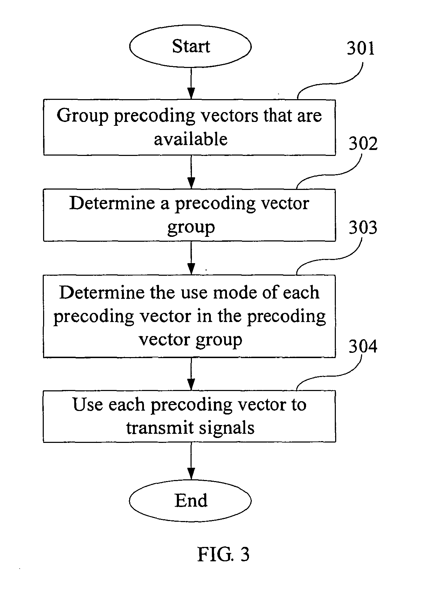

The following describes still another embodiment of the present invention in detail with reference to FIG. 3. This embodiment provides a method for transmitting signals. This embodiment assumes that the UE uses two antennas to perform PUSCH transmission, which does not constitute a limitation on the present invention. When the number of antennas or antenna ports is more than 2, analogy may be made according to the method provided by this embodiment. The method for transmitting signals includes the following steps.

Step 301: Group the precoding vectors that are available.

The precoding vector used by the UE for transmitting the reference signal may be, for example, the same as the precoding vector used in the PUSCH transmission that adopts the precoding mode. For example, the precoding vector may be shown in Table. 1.

**Table 1**

| Serial Number of Precoding Vector | Precoding Vector when Rank is 1 | Precoding Vector when Rank is 2 |
|---|---|---|
| 1 | $\frac{1}{\sqrt{2}}\begin{bmatrix}1 & 1\end{bmatrix}$ | |
| 2 | $\frac{1}{\sqrt{2}}\begin{bmatrix}1 & -1\end{bmatrix}$ | |
| 3 | $\frac{1}{\sqrt{2}}\begin{bmatrix}1 & j\end{bmatrix}$ | |
| 4 | $\frac{1}{\sqrt{2}}\begin{bmatrix}1 & -j\end{bmatrix}$ | |
| 5 | [1 0] | [1 0] |
| 6 | [0 1] | [0 1] |

During grouping, because the number of antennas used by the UE for PUSCH transmission is 2, the 6 vectors in Table 1 may be sorted into 3 groups, with each group having 2 vectors. Considering the conjugate orthogonal vectors are sorted into a group, the vectors with serial numbers 1 and 2 may be sorted into a group, with the group number 1; the vectors with serial numbers 3 and 4 are sorted into a group, with the group number 2; and the vectors with serial numbers 5 and 6 are sorted into a group, with the group number 3.

The UE itself may perform the above grouping according to the grouping method, or may also perform the above grouping according to the grouping method notified by the network, or may further perform direct grouping according to the grouping result of the network.

After the grouping, the precoding vector groups with rank 1 constitute a set of precoding vector groups, and the precoding vector groups with rank 2 constitute another set of precoding vector groups.

Step 301 and other steps may be executed in any order. Step 301 is executed at least once before other steps and may not be executed any more afterward, or is executed during, before, or after any one of the following steps.

Step 302: Determine a precoding vector group.

The determining, by the UE, the precoding vector group, for example, may adopt the determining method of binding with the precoding vector used in the last PUSCH transmission. Specifically, the UE may use the set of precoding vector groups where the precoding vector used in the last PUSCH transmission is included.

Further, the UE may select the precoding vector group with the minimum serial number in the set of precoding vector groups.

When the precoding vector with the serial number 1 is used in the last PUSCH transmission, the UE uses the set of precoding vector groups with rank 1, and selects the precoding vector group with the minimum serial number in the set of precoding vector groups, namely, the precoding vector group with the serial number 1.

The determining, by the UE, the precoding vector group, for example, may include: determining a precoding vector group according to the condition of the UE itself, or determining a precoding vector group according to the determining method indicated by the signaling of the network, or determining a precoding vector group according to the group number of the precoding vector group indicated by the signaling of the network.

Step 303: Determine the use mode of each precoding vector in the precoding vector group.

After the UE determines a precoding vector group, the UE needs to determine how to use each precoding vector in the precoding vector group, that is, use each precoding vector in the determined precoding vector group according to a set rule.

For example, the UE may adopt the solution of binding with the precoding vector used in the current PUSCH transmission when using the precoding vector. Specifically, the precoding vector used in the current PUSCH transmission is used in the first TTI, and afterward, any precoding vector in the precoding vector group may be used in each TTI so long as each precoding vector in the group is used at least once.

For example, in step 302, the precoding vector group determined by the UE is the first group, and the serial number of the precoding vector used in the current PUSCH transmission is 1; therefore, the UE uses the precoding vector with the serial number 1 in the first TTI to perform precoding on the reference signal, and may use the precoding vector with the serial number 2 in the second TTI to perform precoding on the reference signal.

Step 304: Use each precoding vector to transmit signals.

During transmission of the reference signal, for example, the signals may be transmitted on all the antennas or antenna ports used in the PUSCH transmission.

Through this embodiment, the UE may group the precoding vectors that are available, then determine a precoding vector group for use, and determine how to use each precoding vector in the precoding vector group, and finally use each precoding vector to transmit reference signals. Therefore, the network may acquire the channel states corresponding to multiple antennas or antenna ports of the UE by receiving the reference signal transmitted by the UE, and perform scheduling better. In addition, the network may perform flexible configuration, and the requirement that the network should acquire the channel states corresponding to multiple antennas or antenna ports of the UE in the shortest possible time may be met.

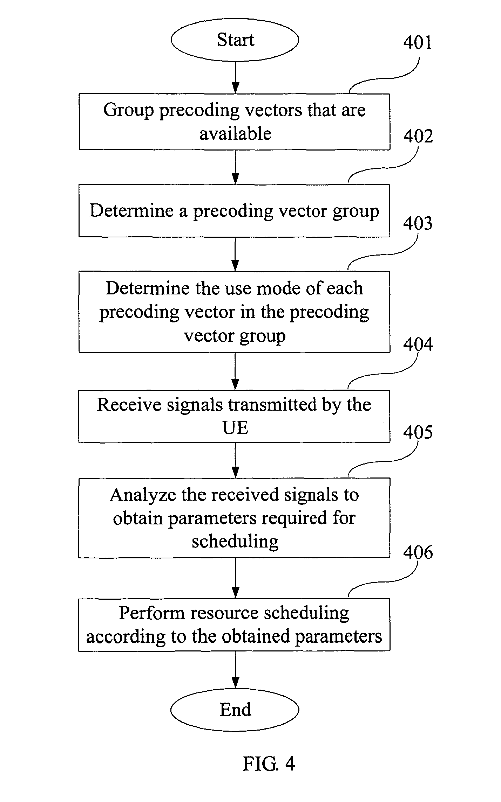

The following describes still another embodiment of the present invention in detail with reference to FIG. 4. This embodiment provides a method for receiving the signal. This embodiment assumes that the UE uses two antennas to perform PUSCH transmission, which does not constitute a limitation on the present invention. When the number of antennas or antenna ports is more than 2, analogy may be made according to the method provided by this embodiment. The method for the transmitting signal includes the following steps.

Step 401: Group the precoding vectors that are available.

The specific grouping method is described in the embodiment above.

The network may also notify the grouping method or grouping result to the UE.

Step 402: Determine a precoding vector group.

The specific determining method is described in the embodiment above.

The network may also notify the determining method to the UE or directly notify the determined precoding vector group to the UE.

Step 403: Determine the use mode of each precoding vector in the precoding vector group.

The specific use method and the determining of the order are described in the embodiment above.

The network may also notify the determining method to the UE or directly notify the precoding vector that needs to be used to the UE.

Step 401 to step 403 are not mandatory; the UE itself may decide the grouping method, the group determining method, and the specific mode of using each precoding vector. In addition, during execution, step 401 to step 403 may be executed in any order.

Step 404: Receive the signals transmitted by the UE.

The network receives the reference the signal transmitted by the UE, where the reference signal is a combined signal of the precoded the reference signal that is transmitted by the UE through multiple antennas or antenna ports.

For example, the channel fading corresponding to the first antenna of the UE is H1, the channel fading corresponding to the second antenna of the UE is H2, and the UE uses the precoding vectors with serial numbers 5 and 6 to transmit the reference signal. In the first TTI, the UE uses the precoding vector with the serial number 5 to transmit the reference signal; and in the second TTI, the UE uses the precoding vector with the serial number 6 to transmit the reference signal. Therefore, in the first TTI, the signal received by the network is the reference signal multiplied by H1; and in the second TTI, the signal received by the network is the reference signal multiplied by H2.

Step 405: Analyze the received the signal to obtain parameters required for scheduling.

The network may perform a simple operation on the signal received in step 404 to obtain the parameters required for scheduling. For example, after the simple operation, H1 and H2 may be obtained respectively. According to the channel fading, the network may implement better scheduling.

Step 406: Perform resource scheduling according to the obtained parameters.

Through this embodiment, the network may obtain the parameters required for scheduling by receiving and analyzing the reference signals transmitted by the UE. Further, because the network may set the grouping method flexibly, determine the precoding vector group to be used, and determine the use of each precoding vector in the precoding vector group, the requirement that the network should acquire the channel states corresponding to multiple antennas or antenna ports of the UE in the shortest possible time may be met.

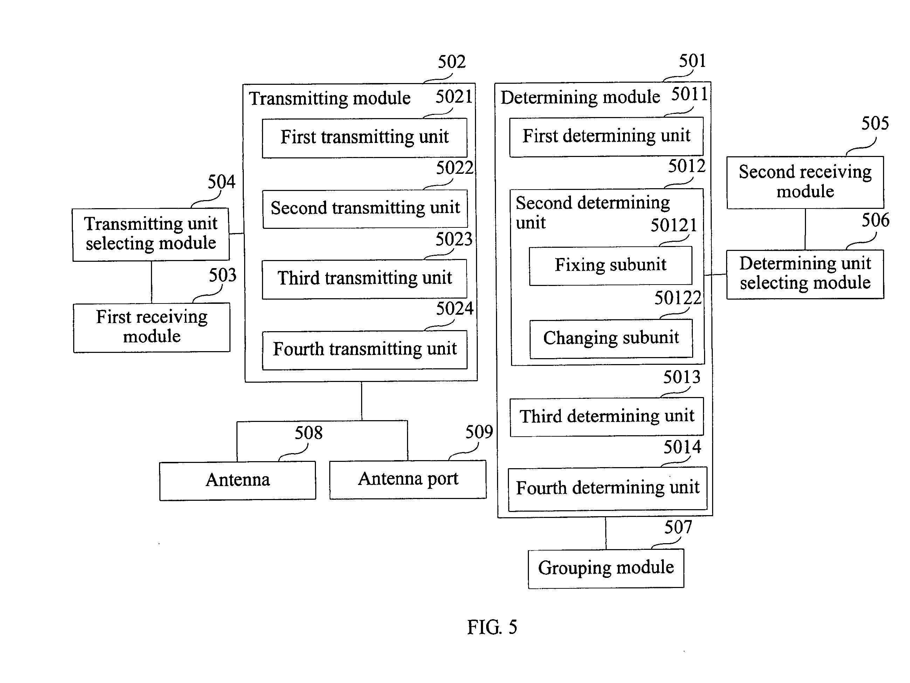

The following describes still another embodiment of the present invention in detail with reference to FIG. 5. This embodiment provides a UE.

The UE includes: a determining module 501, configured to determine a precoding vector group; and a transmitting module 502, configured to use, according to a set rule, each precoding vector in the precoding vector group determined by the determining module 501 to transmit signals.

Through the UE provided by this embodiment, a precoding vector group may be determined and each precoding vector in the precoding vector group is used to transmit signals, so that the network may receive and analyze the signals to obtain the parameters required for scheduling.

Further, in this embodiment, the transmitting module 502 may include one of the following units: a first transmitting unit 5021, configured to use the precoding vector with the minimum or maximum serial number in the precoding vector group determined by the determining module 501 to transmit the signal in a first time segment; a second transmitting unit 5022, configured to use the precoding vector the same as that in the current or last uplink transmission in the precoding vector group determined by the determining module 501 to transmit the signal in the first time segment; and a third transmitting unit 5023, configured to use, according to a use order in different time segments, different precoding vectors in the precoding vector group determined by the determining module to transmit the signal in every N time segments, where the use order includes one or any combination of the following: using the precoding vectors according to an ascending order of serial numbers thereof, and using the precoding vector with the minimum serial number in the adjacent time segment after the precoding vector with the maximum serial number is used; using the precoding vectors according to a descending order of serial numbers thereof, and using the precoding vector with the maximum serial number in the adjacent time segment after the precoding vector with the minimum serial number is used; using the precoding vector with the minimum or maximum serial number in the first time segment; using the precoding vector the same as that in the current time segment or last uplink transmission in the first time segment; and using the precoding vectors according to a random order.

Further, in this embodiment, the UE may further include a first receiving module 503, configured to receive signaling of the network, where the signaling carries an indication of a signal transmission mode of the UE; and a transmitting unit selecting module 504, configured to select, according to the signaling received by the first receiving module 503 or the condition of the UE or the network condition, the first transmitting unit 5021 or the second transmitting unit 5022 or the third transmitting unit 5023 transmit the signal to transmit the signal.

Further, in this embodiment, the determining module 501 includes one or any combination of the following units: a first determining module 5011, configured to determine to use any precoding vector group selected from multiple precoding vector groups; a second determining unit 5012, configured to determine to use a precoding vector group that is preset or indicated by signaling of the network; a third determining unit 5013, configured to determine to use the precoding vector group where the precoding vector used in the current time segment or last uplink transmission is included; and a fourth determining unit 5014, configured to use a precoding vector group in a set of precoding vector groups where the precoding vector used in the current time segment or last uplink transmission is included, where the precoding vector group is a precoding vector group fixed in the set of precoding vector groups, or the precoding vector group is any precoding vector group selected from the set of precoding vector groups.

Further, in this embodiment, the second determining unit 5012 may include: a fixing subunit 50121, configured to use a preset precoding vector group as a fixed precoding vector group; and/or a changing subunit 50122, configured to periodically change the used precoding vector groups starting from a precoding vector group. The fixed precoding vector group or the start precoding vector group is preset or is notified by the network.

Further, in this embodiment, the UE further includes a second receiving module 505, configured to receive signaling of the network, where the signaling carries an indication that the UE determines the precoding vector group; and a determining unit selecting module 506, configured to decide, according to the signaling received by the second receiving module 505 or the condition of the UE or the network condition, the unit that is included in the determining module 501. For example, the network instructs the UE through signaling to select any precoding vector group from multiple precoding vector groups, and therefore, according to the signaling, the determining unit selecting module 506 decides that the determining module 501 includes a first determining unit 5011.

Further, in this embodiment, the UE further includes a grouping module 507, configured to group, according to the grouping method or the signaling indication of the network, the precoding vectors that are available, where the grouping method includes one or any combination of the following: sorting the precoding vectors that are mutually orthogonal into a group; sorting the precoding vectors that are conjugate orthogonal into a group; and after multiple precoding vectors constitute a matrix, if the norm in row and/or column of an inverse matrix of the matrix is the minimum, sorting the multiple precoding vectors into a group.

Further, in this embodiment, the UE further includes multiple antennas 508 or antenna ports 509. The transmitting module 502 is specifically configured to use, according to the set rule, each precoding vector in the precoding vector group determined by the determining module 501 to transmit the signal through more than one antenna or antenna port of the UE.

Through this embodiment, the UE may group, according to the notification of the network or its own decision, the precoding vectors that are available, then determine a precoding vector group for use, and determine how to use each precoding vector in the precoding vector group, and finally use each precoding vector to transmit the reference signal. Therefore, the network may acquire the channel states corresponding to multiple antennas or antenna ports of the UE by receiving the reference signal transmitted by the UE, and perform scheduling better. In addition, the network may perform flexible configuration, and the requirement that the network should acquire the channel states corresponding to multiple antennas or antenna ports of the UE in the shortest possible time may be met.

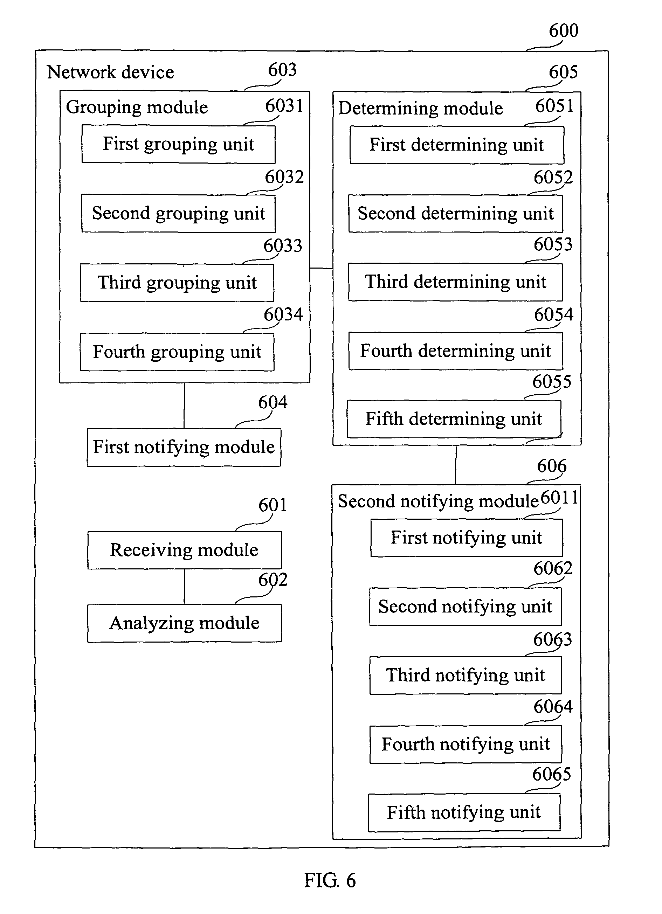

The following describes still another embodiment of the present invention in detail with reference to FIG. 6. This embodiment provides a network device 600. The network device 600 may be, for example, a BS, a home BS, an indoor access point, or other network devices with similar functions.

The network device 600 in this embodiment includes: a receiving module 601, configured to receive the signal that is transmitted by a UE by using precoding vectors; and an analyzing module 602, configured to analyze the signal received by the receiving module 601 to obtain parameters required for scheduling.

Through this embodiment, the network device 600 may receive a combined reference signal formed by multiple precoded reference signals that are transmitted by the UE, and acquire the parameters required for scheduling by analyzing the combined reference signals received in different time segments, for example, channel states corresponding to multiple antennas or antenna ports of the UE.

Further, in this embodiment, the network device 600 may further include: a grouping module 603, configured to group the precoding vectors that are available; and a first notifying module 604, configured to notify a grouping result or grouping method of the grouping module 603 to the UE.

Further, in this embodiment, the grouping module 603 may include one or any combination of the following units: a first grouping unit 6031, configured to sort the precoding vectors that are mutually orthogonal in the precoding vectors that are available into a group; a second grouping unit 6032, configured to sort the precoding vectors that are conjugate orthogonal in the precoding vectors that are available into a group; a third grouping unit 6033, configured to sort multiple precoding vectors into a group after the multiple precoding vectors constitute a matrix, if the norm in row and/or column of an inverse matrix of the matrix is the minimum; and a fourth grouping unit 6034, configured to sort the precoding vectors that are available so that the number of the precoding vectors included in each precoding vector group is equal to the number of antennas or antenna ports used in uplink transmission. For example, the combination of the first grouping unit 6031 and the fourth grouping unit 6034 sorts the precoding vectors that are mutually orthogonal in the precoding vectors that are available into a group, and the number of the precoding vectors in each precoding vector group is equal to the number of antennas or antenna ports used in PUSCH transmission.

Further, in this embodiment, the network device 600 may further include a determining module 605, configured to determine the precoding vector group used by the UE; and a second notifying module 606, configured to notify a determining result or determining method of the determining module 605 to the UE.

Further, in this embodiment, the determining module 605 may include: a first determining unit 6051, configured to determine that the UE uses a fixed precoding vector group; and accordingly, the second notifying module 606 may include a first notifying unit 6061, configured to notify the fixed precoding vector group to the UE, or configured to notify the UE to use a fixed precoding vector group, where the fixed precoding vector group is, for example, a preset precoding vector group or any precoding vector group selected by the UE.

The determining module 605 may further include a second determining unit 6052, configured to determine that the UE changes the used precoding vector groups periodically starting from a precoding vector group; and accordingly, the second notifying module 606 may include a second notifying unit 6062, configured to notify the start precoding vector group and the change period to the UE, or configured to notify the UE to use a precoding vector group as the start precoding vector group and change the used precoding vector groups periodically, where the start precoding vector group is, for example, a preset precoding vector group or any precoding vector group selected by the UE. The change period may be notified by the second notifying unit 6062 and may also be a change period preset in the UE.

The determining module 605 may further include a third determining unit 6053, configured to determine that the UE selects any precoding vector group; and accordingly, the second notifying module 606 may further include a third notifying unit 6063, configured to notify the UE to select any precoding vector group.

The determining module 605 may further include a fourth determining unit 6054, configured to determine that the UE uses the precoding vector group where the precoding vector used in the current time segment or last uplink transmission of the UE is included; and accordingly, the second notifying module 606 may further include a fourth notifying unit 6064, configured to notify the UE to use the precoding vector group where the precoding vector used in the current time segment or last uplink transmission of the UE is included.

The determining module 605 may further include a fifth determining unit 6055, configured to determine that the UE uses a precoding vector group in a set of precoding vector groups where the precoding vector used in the current time segment or last uplink transmission of the UE is included; and accordingly, the second notifying module 606 may further include a fifth notifying unit 6065, configured to notify the UE to use a precoding vector group in a set of precoding vector groups where the precoding vector used in the current time segment or last uplink transmission of the UE is included. The precoding vector group is, for example, a precoding vector group fixed in the set of precoding vector groups, or the precoding vector group is, for example, any precoding vector group selected from the set of precoding vector groups.

In this embodiment, the determining module 605 may include one or any combination of the first determining unit 6051, the second determining unit 6052, the third determining unit 6053, the fourth determining unit 6054, and the fifth determining unit 6055; and accordingly, the second notifying module 606 may include one or any combination of the first notifying unit 6061, the second notifying unit 6062, the third notifying unit 6063, the fourth notifying unit 6064, and the fifth notifying unit 6065.

Through this embodiment, the network device 600 may acquire the channel states corresponding to multiple antennas or antenna ports of the UE by receiving and analyzing the combined signal formed by the precoded reference signals that are transmitted by the UE, and perform scheduling better. Further, because the network device may set the grouping method flexibly, determine the precoding vector group to be used, and determine the use of each precoding vector in the precoding vector group, the requirement that the network should acquire the channel states corresponding to multiple antennas or antenna ports of the UE in the shortest possible time may be met.

Finally, it should be noted that persons of ordinary skill in the art may understand that all or a part of the processes of the method according to the embodiments of the present invention may be implemented by a computer program instructing relevant hardware. The program may be stored in a computer readable storage medium, and when the program is run, the processes of the method according to the embodiments of the present invention are executed. The storage medium may be a magnetic disk, an optical disk, a Read-Only Memory or a Random Access Memory.

Various function units in the embodiments of the present invention may be integrated into one processing module, or be physically independent; or two or more than two function units may be integrated into one module. The preceding integrated module may not only be implemented in the form of hardware, but also implemented in the form of a software function module. If the integrated module is implemented in the form of a software function module as an independent product for sale or use, it may also be stored in a computer readable storage medium. The above storage medium may be a ROM, a magnetic disk or an optical disk.

The exemplary embodiments described above are not intended to limit the present invention. Any modification, equivalent replacement, and improvement made by persons of ordinary skill in the art according to the principle of the present invention shall be covered in the scope of the present invention.

**Claims**

1. A method for transmitting a signal, comprising:

   determining a precoding vector group, wherein the precoding vector group comprises N precoding vectors, and N is an integer greater than 1; and
   using each precoding vector in the precoding vector group to transmit the signal.

2. The method according to claim 1, wherein the using each precoding vector in the precoding vector group to transmit the signal comprises:

   in a first time segment, using a precoding vector with a minimum or maximum serial number in the precoding vector group to transmit the signal; or
   in the first time segment, using a precoding vector the same as that in current or last uplink transmission in the precoding vector group to transmit the signal; or

according to a use order in different time segments, using different precoding vectors in the precoding vector group to transmit the signal in every N time segments.

3. The method according to claim 2, wherein the use order comprises one or any combination of the following orders:

using precoding vectors according to an ascending order of serial numbers thereof, and using a precoding vector with a minimum serial number in an adjacent time segment after a precoding vector with a maximum serial number is used;

using precoding vectors according to a descending order of serial numbers thereof, and using a precoding vector with a maximum serial number in an adjacent time segment after a precoding vector with a minimum serial number is used;

in the first time segment, using a precoding vector with a minimum or maximum serial number;

in the first time segment, using a precoding vector the same as that in a current time segment or last uplink transmission; and

using precoding vectors according to a random order.

4. The method according to claim 2, further comprising:

determining the set rule according to a signaling indication of a network.

5. The method according to claim 1, wherein the determining the precoding vector group comprises: determining a precoding vector group according to a determining method, wherein the determining method comprises one or any combination of the following:

determining to use any precoding vector group selected from multiple precoding vector groups;

determining to use a precoding vector group that is preset or indicated by signaling of a network;

determining to use a precoding vector group where a precoding vector used in a current time segment or last uplink transmission is included; and

determining to use a precoding vector group in a set of precoding vector groups where a precoding vector used in the current time segment or last uplink transmission is included, wherein the precoding vector group is a precoding vector group fixed in the set of precoding vector groups, or the precoding vector group is any precoding vector group selected from the set of precoding vector groups.

6. The method according to claim 5, wherein the using the precoding vector group that is preset or indicated by the signaling of the network further comprises:

using the precoding vector group that is preset or indicated by the signaling of the network as a fixed precoding vector group; and/or

periodically changing a precoding vector group that is used by starting from the precoding vector group that is preset or indicated by the signaling of the network.

7. The method according to claim 5 or 6, further comprising:

selecting the determining method according to a signaling indication of the network.

8. The method according to any one of claims 1 to 6, further comprising:

grouping precoding vectors that are available according to a grouping method or the signaling indication of the network, wherein the grouping method comprises one or any combination of the following:

sorting precoding vectors that are mutually orthogonal into a group;

sorting precoding vectors that are conjugate orthogonal into a group;

after multiple precoding vectors constitute a matrix, if the norm in row and/or column of an inverse matrix of the matrix is the minimum, sorting the multiple precoding vectors into a group; and

sorting M precoding vectors into a group, wherein M is the number of antennas or antenna ports used in uplink transmission.

9. The method according to any one of claims 1 to 6, wherein the signal is reference signal; and/or the uplink transmission is transmission on a Physical Uplink Share Channel.

10. A method for receiving a signal, comprising:

   receiving the signal that is transmitted by a User Equipment by using each precoding vector in a precoding vector group, wherein the precoding vector group comprises N precoding vectors, and N is an integer greater than 1; and
   analyzing the received the signal to obtain parameters required for scheduling.

11. The method according to claim 10, further comprising:

   grouping precoding vectors that are available, and notifying a grouping method or a grouping result to the UE, wherein the grouping method comprises one or any combination of the following:

      sorting precoding vectors that are mutually orthogonal into a group;
      sorting precoding vectors that are conjugate orthogonal into a group;
      after multiple precoding vectors constitute a matrix, if the norm in row and/or column of an inverse matrix of the matrix is the minimum, sorting the multiple precoding vectors into a group; and
      sorting M precoding vectors into a group, wherein M is the number of antennas or antenna ports used in uplink transmission.

12. The method according to claim 10, further comprising:

   determining a precoding vector group used by the UE, and notifying the precoding vector group to the UE.

13. The method according to claim 12, wherein the determining the precoding vector group used by the UE and notifying the precoding vector group to the UE comprises:

   determining that the UE uses a fixed precoding vector group, and notifying the fixed precoding vector group to the UE; and/or
   determining that the UE periodically changes a precoding vector group that is used by starting from a precoding vector group, and notifying the start precoding vector group and the change period to the UE; and/or
   determining that the UE selects any precoding vector group, and notifying the UE to select any precoding vector group; and/or
   determining that the UE uses a precoding vector group where a precoding vector used in a current time segment or last uplink transmission of the UE is included, and notifying the UE to use the precoding vector group where the precoding vector used in the current time segment or last uplink transmission of the UE is included; and/or
   determining that the UE uses a precoding vector group in a set of precoding vector groups where the precoding vector used in the current time segment or last uplink transmission of the UE is included, and notifying the UE to use a precoding vector group in the set of precoding vector groups where the precoding vector used in the current time segment or last uplink transmission of the UE is included, wherein the precoding vector group is a precoding vector group fixed in the set of precoding vector groups, or the precoding vector group is any precoding vector group selected from the set of precoding vector groups.

14. A User Equipment (UE), comprising:

   a determining module, configured to determine a precoding vector group, wherein the precoding vector group comprises N precoding vectors, and N is an integer greater than 1; and
   a transmitting module, configured to transmit the signal by using each precoding vector in the precoding vector group determined by the determining module.

15. The UE according to claim 14, wherein the transmitting module comprises:

   a first transmitting unit, configured to use a precoding vector with a minimum or maximum serial number in the precoding vector group determined by the determining module to transmit the signal in a first time segment; or
   a second transmitting unit, configured to use a precoding vector the same as that in current or last uplink transmission in the precoding vector group determined by the determining module to transmit the signal in the first time segment; or

a third transmitting unit, configured to use, according to a use order in different time segments, different precoding vectors in the precoding vector group determined by the determining module to transmit the signal in every N time segments, wherein the use order comprises one or any combination of the following:

using precoding vectors according to an ascending order of serial numbers thereof, and using a precoding vector with a minimum serial number in an adjacent time segment after a precoding vector with a maximum serial number is used;

using precoding vectors according to a descending order of serial numbers thereof, and using a precoding vector with a maximum serial number in an adjacent time segment after a precoding vector with a minimum serial number is used;

in the first time segment, using a precoding vector with a minimum or maximum serial number;

in the first time segment, using a precoding vector the same as that in a current time segment or last uplink transmission; and

using precoding vectors according to a random order.

**16.** The UE according to claim 15, further comprising:

a first receiving module, configured to receive signaling of a network, wherein the signaling carries an indication of a signal transmission mode of the UE; and

a transmitting selecting module, configured to select, according to the signaling received by the first receiving module or a corresponding condition, the first transmitting unit or the second transmitting unit or the third transmitting unit to transmit the signal.

**17.** The UE according to claim 14, wherein the determining module comprises one or any combination of the following units:

a first determining unit, configured to determine to use any precoding vector group selected from multiple precoding vector groups;

a second determining unit, configured to determine to use a precoding vector group that is preset or indicated by signaling of a network;

a third determining unit, configured to determine to use a precoding vector group where a precoding vector used in a current time segment or last uplink transmission is included; and

a fourth determining unit, configured to determine to use a precoding vector group in a set of precoding vector groups where a precoding vector used in the current time segment or last uplink transmission is included, wherein the precoding vector group is a precoding vector group fixed in the set of precoding vector groups, or the precoding vector group is any precoding vector group selected from the set of precoding vector groups.

**18.** The UE according to claim 17, wherein the second determining unit comprises:

a fixing subunit, configured to use the precoding vector group that is preset or indicated by the signaling of the network as a fixed precoding vector group; and/or

a changing subunit, configured to periodically change a precoding vector group that is used by starting from the precoding vector group that is preset or indicated by the signaling of the network.

**19.** The UE according to claim 17 or 18, further comprising:

a second receiving module, configured to receive the signaling of the network, wherein the signaling carries an indication that the UE determines a precoding vector group; and

a determining selecting module, configured to decide, according to the signaling received by the second receiving module or a corresponding condition, a unit that is comprised in the determining module.

**20.** The UE according to any one of claims 14 to 18, further comprising:

a grouping module, configured to group, according to a grouping method or the signaling indication of the network, precoding vectors that are available, wherein the grouping method comprises one or any combination of the following:

sorting precoding vectors that are mutually orthogonal into a group;
sorting precoding vectors that are conjugate orthogonal into a group;
after multiple precoding vectors constitute a matrix, if the norm in row and/or column of an inverse matrix of the matrix is the minimum, sorting the multiple precoding vectors into a group; and
sorting M precoding vectors into a group, wherein M is the number of antennas or antenna ports used in uplink transmission.

21. A network device, comprising:

a receiving module, configured to receive the signal that is transmitted by a User Equipment (UE) by using each precoding vector in a precoding vector group, wherein the precoding vector group comprises N precoding vectors, and N is an integer greater than 1; and
an analyzing module, configured to analyze the signal received by the receiving module to obtain parameters required for scheduling.

22. The network device according to claim 21, further comprising:

a grouping module, configured to group precoding vectors that are available; and
a first notifying module, configured to notify a grouping result or a grouping method of the grouping module to the UE,
wherein the grouping module comprises one or any combination of the following units:

a first grouping unit, configured to sort precoding vectors that are mutually orthogonal in the precoding vectors that are available into a group;
a second grouping unit, configured to sort precoding vectors that are conjugate orthogonal in the precoding vectors that are available into a group;
a third grouping unit, configured to sort multiple precoding vectors into a group after the multiple precoding vectors constitute a matrix, if the norm in row and/or column of an inverse matrix of the matrix is the minimum; and
a fourth grouping unit, configured to sort precoding vectors that are available so that the number of precoding vectors comprised in each precoding vector group is equal to the number of antennas or antenna ports used in uplink transmission.

23. The network device according to claim 22, further comprising:

a determining module, configured to determine a precoding vector group used by the UE; and
a second notifying module, configured to notify a determining result or a determining method of the determining module to the UE.

24. The network device according to claim 23, wherein
the determining module comprises one or any combination of the following units:

a first determining unit, configured to determine a fixed precoding vector group used by the UE;
a second determining unit, configured to determine that the UE changes used precoding vector groups periodically by starting from a precoding vector group;
a third determining unit, configured to determine that the UE selects any precoding vector group;
a fourth determining unit, configured to determine that the UE uses a precoding vector group where a precoding vector used in a current time segment or last uplink transmission of the UE is included; and
a fifth determining unit, configured to determine that the UE uses a precoding vector group in a set of precoding vector groups where the precoding vector used in the current time segment or last uplink transmission of the UE is included; and accordingly,
the second notifying module comprises one or any combination of the following units:
a first notifying unit, configured to notify the fixed precoding vector group to the UE, or configured to notify the UE to use a fixed precoding vector group;
a second notifying unit, configured to notify the start precoding vector group and the change period to the UE, or configured to notify the UE to use a precoding vector group as the start precoding vector group and periodically change used precoding vector groups;
a third notifying unit, configured to notify the UE to select any precoding vector group;

a fourth notifying unit, configured to notify the UE to use the precoding vector group where the precoding vector used in the current time segment or last uplink transmission of the UE is included; and

a fifth notifying unit, configured to notify the UE to use a precoding vector group in the set of precoding vector groups where the precoding vector used in the current time segment or last uplink transmission of the UE is included.

```
          ┌──────────┐
          │  Start   │
          └────┬─────┘
               │                          101
               ▼
    ┌──────────────────────┐
    │ Determine a precoding vector │
    │        group         │
    └──────────┬───────────┘          102
               │
               ▼
    ┌──────────────────────┐
    │  Use each precoding vector to │
    │     transmit signals  │
    └──────────┬───────────┘
               │
               ▼
          ┌──────────┐
          │   End    │
          └──────────┘
```

FIG. 1

```
          ┌──────────┐
          │  Start   │
          └────┬─────┘
               │                          201
               ▼
    ┌──────────────────────┐
    │ Receive signals transmitted by a │
    │          UE          │
    └──────────┬───────────┘          202
               │
               ▼
    ┌──────────────────────┐
    │  Analyze the signals to obtain │
    │ parameters required for scheduling │
    └──────────┬───────────┘
               │
               ▼
          ┌──────────┐
          │   End    │
          └──────────┘
```

FIG. 2

```
        ┌─────────────┐
        │    Start    │
        └─────────────┘                    301
               │
               ▼
   ┌───────────────────────────┐
   │ Group precoding vectors that are │
   │         available          │          302
   └───────────────────────────┘
               │
               ▼
   ┌───────────────────────────┐
   │ Determine a precoding vector │
   │           group            │          303
   └───────────────────────────┘
               │
               ▼
   ┌───────────────────────────┐
   │ Determine the use mode of each │
   │ precoding vector in the precoding │
   │        vector group         │          304
   └───────────────────────────┘
               │
               ▼
   ┌───────────────────────────┐
   │  Use each precoding vector to │
   │      transmit signals       │
   └───────────────────────────┘
               │
               ▼
        ┌─────────────┐
        │     End     │
        └─────────────┘
```

FIG. 3

FIG. 4

FIG. 5

EP 2 439 978 A1

600

Network device 603

605

Grouping module 6031

Determining module 6051

First grouping unit

First determining unit

6032

6052

Second grouping unit

Second determining unit

6033

6053

Third grouping unit

Third determining unit

6034

6054

Fourth grouping unit

Fourth determining unit

6055

604

Fifth determining unit

First notifying module

606

601

Second notifying module 6011

Receiving module

First notifying unit

602

6062

Analyzing module

Second notifying unit

6063

Third notifying unit

6064

Fourth notifying unit

6065

Fifth notifying unit

FIG. 6

<table>
<tr><td colspan="2"><h1>INTERNATIONAL SEARCH REPORT</h1></td><td>International application No.<br><br>PCT/CN2009/072051</td></tr>
</table>

| **A.  CLASSIFICATION OF SUBJECT MATTER** |
|---|
| H04W 28/00 (2009.01)i<br>According to International Patent Classification (IPC) or to both national classification and IPC |

| **B.    FIELDS SEARCHED** |
|---|
| Minimum documentation searched (classification system followed by classification symbols)<br><br>IPC: H04B, H04L, H04J, H04Q, H04W |
| Documentation searched other than minimum documentation to the extent that such documents are included in the fields searched<br><br> |
| Electronic data base consulted during the international search (name of data base and, where practicable, search terms used)<br><br>CPRS, CNKI, WPI, EPODOC: pre?code, pre?coding, precode, precoding, vector?, transmit+, antenna?, channel |

**C.    DOCUMENTS CONSIDERED TO BE RELEVANT**

| Category* | Citation of document, with indication, where appropriate, of the relevant passages | Relevant to claim No. |
|---|---|---|
| X | CN101217304A (UNIV BEIJING POSTS&TELECOM) 09 Jul. 2008 (09.07.2008) claim 1 | 1,10,14,21 |
| A |  | 2-9,11-13,15-20,22-24 |
| A | CN101136718A (ZHONGXIN COMMUNICATION CO LTD SHENZHEN) 05 Mar. 2008 (05.03.2008) the whole document | 1-24 |
| A | WO2009041069A1 (PANASONIC CORP) 02 Apr. 2009 (02.04.2009) the whole document | 1-24 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search<br>25 Feb. 2010 (25.02.2010) | Date of mailing of the international search report<br>**18 Mar. 2010 (18.03.2010)** |
|---|---|
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br>HAO Aixin<br><br>Telephone No. (86-10)62411443 |

Form PCT/ISA /210 (second sheet) (July 2009)

| INTERNATIONAL SEARCH REPORT<br>Information on patent family members | | International application No.<br><br>*PCT/CN2009/072051* | |
|---|---|---|---|
| Patent Documents referred<br>in the Report | Publication Date | Patent Family | Publication Date |
| CN101217304A | 09.07.2008 | NONE | |
| CN101136718A | 05.03.2008 | NONE | |
| WO2009041069A1 | 02.04.2009 | NONE | |

Form PCT/ISA /210 (patent family annex) (July 2009)